# EUROPÄISCHE PATENTSCHRIFT

(11) **EP 0 981 459 B1**
(45) Veröffentlichungstag und Bekanntmachung des Hinweises auf die Patenterteilung: **17.04.2002**
(21) Anmeldenummer: 98924282.1
(22) Anmeldetag: 06.05.1998
(51) Int. Cl.: B60K 26/02, G05G 1/14

(54) **PEDAL**
PEDAL
PEDALE

(30) Priorität: 15.05.1997 DE 19720390
(43) Veröffentlichungstag der Anmeldung: 01.03.2000
(73) Patentinhaber: Siemens Aktiengesellschaft, 80333 München (DE)
(72) Erfinder: KOHLEN, Peter, D-61273 Wehrheim (DE)
(74) Vertreter: Klein, Thomas, Dipl.-Ing. (FH)
(86) Internationale Anmeldenummer: EP9802655
(87) Internationale Veröffentlichungsnummer: WO9851525

(56) Entgegenhaltungen:
- WO-A-89/07706
- DE-A- 19 517 172
- DE-A- 19 536 699

## Beschreibung

Die Erfindung betrifft ein Pedal mit einem in einem Halteteil schwenkbar gelagerten Pedalarm, welcher mittels einer Pedalplatte von einer Fußkraft auslenkbar und von zumindest einer Rückstellfeder in eine Grundstellung zurückschwenkbar ist, mit einem Sollwertgeber zur Erzeugung eines elektrischen Signals in Abhängigkeit von der Stellung des Pedalarms und mit einem Reibungsdämpfer zur Dämpfung der Bewegung des Pedal-arms.

Solche Pedale werden beispielsweise in einem Kraftfahrzeug mit einem elektronischen Lastregelsystem als Fahrpedal eingesetzt und sind aus der WO-A-8907706 bekannt. Der Reibungsdämpfer hat in der Regel einen Reibklotz, der mittels einer Feder gegen eine Reibfläche vorgespannt ist. Bei einer Bewegung des Pedalarms gleitet der Reibklotz über die Reibfläche und verhindert damit, daß insbesondere beim Loslassen des Pedalarms dessen Bewegung unverzögert auf den Sollwertgeber übertragen wird. Hierbei ist die im Reibungsdämpfer erzeugte Reibung in Betätigungsrichtung des Pedal-arms meist größer als in entgegengesetzter Richtung. Der Reibungsdämpfer erzeugt eine Kraft-Hysterese, die die Auslenkung des Pedalarms dämpft und damit ein freies Schwingen des das Pedal betätigenden Fußes verhindert. Der Reibklotz ist bei der Montage des Pedals gegen die Reibfläche der vorgesehenen Reibung entsprechend vorzuspannen und auszurichten. Hierdurch besteht das Pedal aus sehr vielen Bauteilen, die aufwendig zu fertigen und zu montieren sind.

Der Erfindung liegt das Problem zugrunde, ein Pedal der eingangs genannten Art so zu gestalten, daß es möglichst wenige Bauteile aufweist und besonders einfach zu montieren ist.

Dieses Problem wird erfindungsgemäß durch die Merkmale des Patentanspruches 1 gelöst.

Durch diese Gestaltung benötigt das erfindungsgemäße Pedal zur Erzeugung der vorgesehenen Dämpfung nur die Hülse als einziges Bauteil für den Reibklotz und die Reibfläche. Das erfindungsgemäße Pedal besteht daher aus besonders wenigen Bauteilen. Die erforderliche Dämpfung des Reibungsdämpfers läßt sich durch die Vorspannung der Endbereiche und die Materialwahl der Hülse festlegen und muß deshalb nicht mehr bei der Montage des Pedals eingestellt werden. Hierdurch ist das Pedal besonders einfach zu montieren.

Das Betätigungselement könnte beispielsweise als ein die Hülse umschlingendes Band ausgebildet sein und bei einem Niederdrücken des Pedalarms die Hülse vorspannen. Hierdurch gleiten die Endbereiche der Hülse übereinander und erzeugen so die vorgesehene Reibung. Das erfindungsgemäße Pedal hat jedoch besonders geringe Abmessungen, wenn die Rückstellfeder als Schenkelfeder ausgebildet ist und die Hülse mit ihrem äußeren Umfang an der Innenseite der Rückstellfeder anliegt. Da die als Schenkelfeder ausgebildete Rückstellfeder bei einem Niederdrücken des Pedalarms ihren Durchmesser verringert und damit die Hülse vorspannt, benötigt der Reibungsdämpfer durch diese Gestaltung kein separat zu montierendes Betätigungselement.

Eine Relativbewegung zwischen der Hülse und der Rückstellfeder könnte zu einer Beschädigung der Hülse und der Rückstellfeder führen. Eine solche Relativbewegung läßt sich gemäß einer anderen vorteilhaften Weiterbildung der Erfindung einfach vermeiden, wenn ein Endbereich der Hülse an dem Halteteil befestigt ist.

Ein Verharren der Hülse in einem zusammengedrückten Zustand läßt sich gemäß einer anderen vorteilhaften Weiterbildung der Erfindung verhindern. wenn der außenseitige Endbereich der Hülse an der Rückstellfeder befestigt ist.

Die Hülse läßt sich gemäß einer anderen vorteilhaften Weiterbildung der Erfindung unabhängig von der erforderlichen Reibkraft aus einem beliebigen Material fertigen, wenn die Hülse an ihren Endbereichen einen Reibbelag aufweist. Hierdurch kann man die Hülse entsprechend der vorgesehenen Vorspannkraft ihrer Endbereiche beispielsweise aus einem elastischen Kunststoff oder aus Federstahl fertigen. Als Kunststoff eignet sich insbesondere Polyacetal.

Die Hülse läßt sich mit dem Reibbelag gemäß einer anderen vorteilhaften Weiterbildung der Erfindung besonders kostengünstig fertigen, wenn die Hülse eine Beschichtung als Reibbelag aufweist.

Ein für die vorgesehene Reibung erforderlicher Reibungskoeffizient an den Endbereichen der Hülse läßt sich gemäß einer anderen vorteilhaften Weiterbildung der Erfindung einfach erzeugen, wenn die Hülse oder der Reibbelag Füllstoffe aufweist.

Die Reibung ist gemäß einer anderen vorteilhaften Weiterbildung der Erfindung über den gesamten Weg des Pedalarms nahezu konstant, wenn die Füllstoffe des Reibbelags Teflon enthalten.

Der Reibbelag ist gemäß einer anderen vorteilhaften Weiterbildung der Erfindung zuverlässig mit der Hülse verbunden, wenn der Reibbelag auf die Hülse aufgesintert ist. Ein weiterer Vorteil dieser Gestaltung besteht darin, daß sich durch das Aufsintern verschiedenartigster Werkstoffe nahezu beliebige Reibungskoeffizienten erzeugen lassen.

Die Erfindung läßt zahlreiche Ausführungsformen zu. Zur weiteren Verdeutlichung ihres Grundprinzips ist eine davon in der Zeichnung dargestellt und wird nachfolgend beschrieben. Diese zeigt in
- Figur 1: eine schematische Darstellung eines erfindungsgemäßen Pedals,
- Figur 2: eine Schnittdarstellung durch das Pedal aus Figur 1 entlang der Linie II - II.

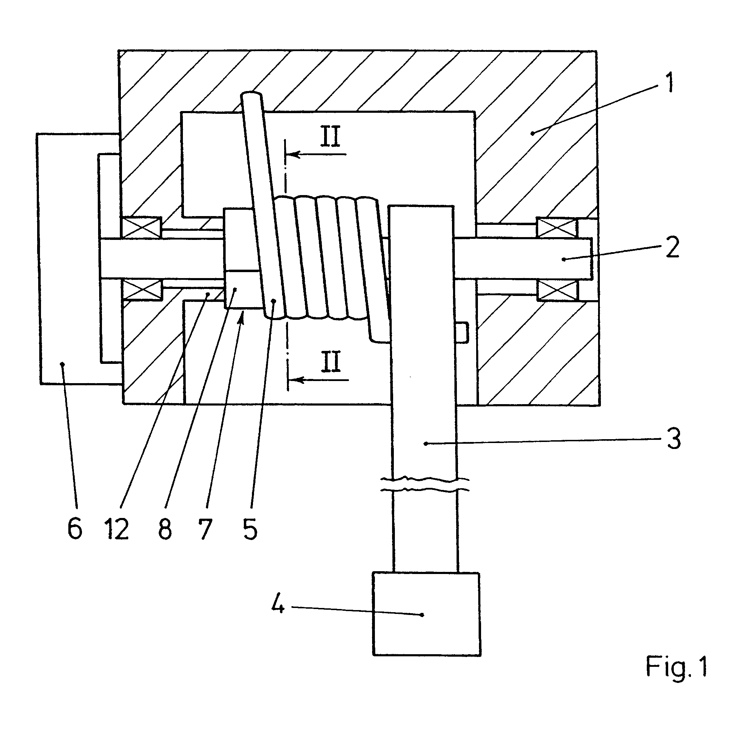

Die Figur 1 zeigt ein erfindungsgemäßes Pedal mit einer in einem Halteteil 1 schwenkbar gelagerten Welle 2. Auf der Welle 2 ist ein Pedalarm 3 mit einer Pedalplatte 4 befestigt. Weiterhin hat das Pedal eine als Schenkelfeder ausgebildete Rückstellfeder 5, die mit einem Ende in dem Halteteil 1 befestigt ist und mit dem anderen Ende den Pedalarm 3 teilweise umgreift. Hierdurch wird der Pedalarm 3 in eine Grundstellung vorgespannt. An dem Halteteil 1 ist ein Sollwertgeber 6 befestigt. Der Sollwertgeber 6 erzeugt in Abhängigkeit von dem Stellwinkel der Welle 2 elektrische Signale. Die Bewegung des Pedalarms 3 wird von einem Reibungsdämpfer 7 mit einer geschlitzten, innerhalb der Rückstellfeder 5 angeordneten Hülse 8 gedämpft.

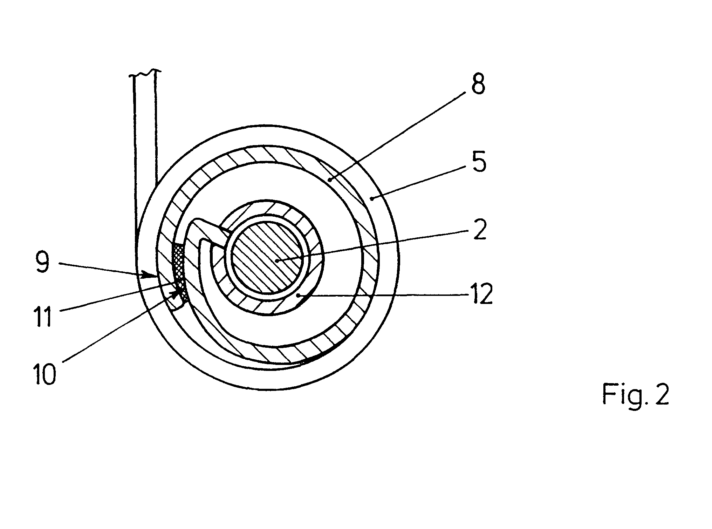

Die Figur 2 zeigt die Hülse 8 und die Rückstellfeder 5 in einer vergrößerten Schnittdarstellung entlang der Linie II - II aus Figur 1. Die Hülse 8 hat einander überlappende Endbereiche 9, 10. Einer der Endbereiche 9 trägt auf seiner dem zweiten Endbereich 10 zugewandten Seite einen Reibbelag 11. Der zweite Endbereich 10 ist an einem umlaufenden Rand 12 des Halteteils 1 befestigt, während der erste Endbereich 9 an der Innenseite der Rückstellfeder 5 anliegt. Bei einem Niederdrücken des in Figur 1 dargestellten Pedalarms 3 spannt sich die Rückstellfeder 5 und verringert dabei ihren Durchmesser. Die Hülse 8 wird hierbei zusammengedrückt. Die Endbereiche 9, 10 der Hülse 8 gleiten übereinander und dämpfen die Bewegung des Pedalarms 3. Die Dämpfung ist beim Niederdrücken des Pedalarms 3 größer als beim Loslassen. Der Reibungsdämpfer 7 erzeugt eine Kraft-Hysterese. Durch die Dämpfung wird eine zuverlässige und störungsfreie Bewegung des Sollwertgebers 6 sichergestellt.

## Patentansprüche

1. Pedal mit einem in einem Halteteil (1) schwenkbar gelagerten Pedalarm (3), welcher mittels einer Pedalplatte (4) von einer Fußkraft auslenkbar und von zumindest einer Rückstellfeder (5) in eine Grundstellung zurückschwenkbar ist, mit einem Sollwertgeber (6) zur Erzeugung eines elektrischen Signals in Abhängigkeit von der Stellung des Pedalarms (3) und mit einem Reibungsdämpfer zur Erzeugung einer Dämpfung der Bewegung des Pedalarms (3), **dadurch gekennzeichnet, daß** der Reibungsdämpfer (7) eine geschlitzte Hülse (8) mit zwei einander überlappenden und gegeneinander vorgespannten Endbereichen (9, 10) und ein Betätigungselement zur Erzeugung einer Relativbewegung der Endbereiche (9, 10) bei einer Bewegung des Pedalarms (3) aufweist, wobei die Hülse (8) an ihren Endbereichen (9, 10) einen Reibbelag (11) aufweist.

2. Pedal nach Anspruch 1, **dadurch gekennzeichnet, daß** die zumindest eine Rückstellfeder (5) als Schenkelfeder ausgebildet ist und die Hülse (8) mit ihrem äußeren Umfang an der Innenseite der zumindest einen Rückstellfeder (5) anliegt.

3. Pedal nach Anspruch 1 oder 2, **dadurch gekennzeichnet, daß** ein Endbereich (10) der Hülse (8) an dem Halteteil (1) befestigt ist.

4. Pedal nach zumindest einem der vorhergehenden Ansprüche, **dadurch gekennzeichnet, daß** der außenseitige Endbereich (9) der Hülse (8) an der zumindest einen Rückstellfeder (5) befestigt ist.

5. Pedal nach zumindest einem der vorhergehenden Ansprüche, **dadurch gekennzeichnet, daß** das Betätigungselement die zumindest eine Rückstellfeder (5) ist.

6. Pedal nach Anspruch 5, **dadurch gekennzeichnet, daß** die Hülse (8) eine Beschichtung als Reibbelag (11) aufweist.

7. Pedal nach zumindest einem der vorhergehenden Ansprüche, **dadurch gekennzeichnet, daß** die Hülse (8) oder der Reibbelag (11) Füllstoffe aufweist.

8. Pedal nach Anspruch 7, **dadurch gekennzeichnet, daß** die Füllstoffe des Reibbelags (11) Teflon enthalten.

9. Pedal nach zumindest einem der vorhergehenden Ansprüche, **dadurch gekennzeichnet, daß** der Reibbelag (11) auf die Hülse (8) aufgesintert ist.

## Claims

1. Pedal, with a pedal arm (3) which is pivotably mounted in a holding part (1) and which can be deflected by a foot force by means of a pedal plate (4) and can be pivoted back into a basic position by at least one return spring (5), with a desired-value transmitter (6) for generating an electrical signal as a function of the position of the pedal arm (3), and with a frictional damper for generating a damping of the movement of the pedal arm (3), **characterized in that** the frictional damper (7) has a slotted sleeve (8) with two end regions (9, 10) overlapping one another and prestressed relative to one another and an actuating element for generating a relative movement of the end regions (9, 10) during a movement of the pedal arm (3), the sleeve (8) having a frictional lining (11) on its end regions (9, 10).

2. Pedal according to Claim 1, **characterized in that** the at least one return spring (5) is designed as a leg spring and the sleeve (8) bears with its outer circumference against the inner face of the at least one return spring (5).

3. Pedal according to Claim 1 or 2, **characterized in that** one end region (10) of the sleeve (8) is fastened to the holding part (1).

4. Pedal according to at least one of the preceding claims, **characterized in that** the outer end region (9) of the sleeve (8) is fastened to the at least one return spring (5).

5. Pedal according to at least one of the preceding claims, **characterized in that** the actuating element is the at least one return spring (5).

6. Pedal according to Claim 5, **characterized in that** the sleeve (8) has a coating as the frictional lining (11).

7. Pedal according to at least one of the preceding claims, **characterized in that** the sleeve (8) or the frictional lining (11) has fillers.

8. Pedal according to Claim 7, **characterized in that** the fillers of the frictional lining (11) contain Teflon.

9. Pedal according to at least one of the preceding claims, **characterized in that** the frictional lining (11) is sintered onto the sleeve (8).

## Revendications

1. Pédale présentant un bras de pédale (3) monté à pivotement dans une pièce de maintien (1), apte à être déplacé par la force du pied au moyen d'une plaque de pédale (4) et à être ramené dans une position de base par au moins un ressort de rappel (5), avec un émetteur (6) de valeurs de consigne pour créer un signal électrique en fonction de la position du bras de pédale (3) et un amortisseur à friction pour la création d'un amortissement du déplacement du bras de pédale (3), **caractérisée en ce que** l'amortisseur à friction (7) présente une douille fendue (8) présentant deux régions d'extrémité (9, 10) superposées l'une à l'autre et précontraintes l'une contre l'autre, et un élément d'actionnement pour la création d'un déplacement relatif des régions d'extrémité (9, 10) lors d'un déplacement du bras de pédale (3), la douille (8) présentant une garniture de friction (11) sur ses zones d'extrémité (9, 10).

2. Pédale selon la revendication 1, **caractérisée en ce que** le ressort de rappel (5) au moins présent est configuré comme ressort hélicoïdal, et **en ce que** la douille (8) repose par sa périphérie extérieure sur le côté intérieur du ressort de rappel (5) au moins présent.

3. Pédale selon la revendication 1 ou 2, **caractérisée en ce qu'**une zone d'extrémité (10) de la douille (8) est fixée à la pièce de maintien (1).

4. Pédale selon au moins l'une des revendications précédentes, **caractérisée en ce que** la zone d'extrémité (9) extérieure de la douille (8) est fixée au ressort de rappel (5) au moins présent.

5. Pédale selon moins l'une des revendications précédentes, **caractérisée en ce que** l'élément d'actionnement est le ressort de rappel (5) au moins présent.

6. Pédale selon la revendication 5, **caractérisée en ce que** la douille (8) présente un revêtement qui sert de garniture de friction (11).

7. Pédale selon au moins l'une des revendications précédentes, **caractérisée en ce que** la douille (8) ou la garniture de frottement (11) présentent des charges.

8. Pédale selon la revendication 7, **caractérisée en ce que** les charges de la garniture de friction (11) contiennent du Téflon.

9. Pédale selon au moins l'une des revendications précédentes, **caractérisée en ce que** la garniture de friction (11) est frittée sur la douille (8).
